(19) **Europäisches Patentamt / European Patent Office / Office européen des brevets**

(11) **EP 4 307 210 B1**

(12) **FASCICULE DE BREVET EUROPÉEN**

(45) Date de publication et mention de la délivrance du brevet:
**18.02.2026 Bulletin 2026/08**

(21) Numéro de dépôt: **23180980.7**

(22) Date de dépôt: **22.06.2023**

(51) Classification Internationale des Brevets (IPC):
**G06T 3/40** *(2024.01)*     **G06V 10/22** *(2022.01)*
**G06V 10/25** *(2022.01)*     **G06V 10/32** *(2022.01)*
**G06V 10/62** *(2022.01)*     **H04N 5/262** *(2006.01)*

(52) Classification Coopérative des Brevets (CPC):
**G06V 10/235; G06T 3/40; G06V 10/25;**
**G06V 10/32; G06V 10/62; H04N 5/2628;**
G06T 2207/10016; G06T 2207/20104;
G06T 2207/20132; G06T 2207/30196;
G06T 2207/30201; H04N 23/682

(54) **PROCÉDÉ DE SÉLECTION DE PORTIONS D'IMAGES DANS UN FLUX VIDÉO ET SYSTÈME EXÉCUTANT LE PROCÉDÉ**

VERFAHREN ZUR AUSWAHL VON BILDPORTIONEN IN EINEM VIDEOSTROM UND SYSTEM ZUR DURCHFÜHRUNG DES VERFAHRENS

METHOD FOR SELECTING PORTIONS OF IMAGES IN A VIDEO STREAM AND SYSTEM FOR IMPLEMENTING THE METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.06.2022 FR 2206559**

(43) Date de publication de la demande:
**17.01.2024 Bulletin 2024/03**

(73) Titulaire: **Sagemcom Broadband SAS**
**92270 Bois-Colombes (FR)**

(72) Inventeurs:
• **OBEID, Jad Abdul Rahman**
**92500 RUEIL MALMAISON (FR)**
• **BERGER, Jérôme**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
CN-C- 100 397 411     US-A1- 2021 365 707
US-A1- 2022 198 774

**Description**

DOMAINE TECHNIQUE

La présente invention se rapporte au traitement d'un flux vidéo d'une application de visioconférence et à la sélection de portions d'images à restituer sur un dispositif de restitution du flux vidéo. L'invention se rapporte plus précisément à un procédé de cadrage amélioré d'un ou plusieurs interlocuteurs lors d'une visioconférence.

ETAT DE LA TECHNIQUE ANTERIEURE

Des techniques de suivi d'un ou plusieurs interlocuteurs filmés par un système de visioconférence existent. Ces techniques opèrent un recadrage de l'image en fonction de la position de l'interlocuteur filmé, par exemple lorsque celui-ci se déplace dans l'environnement, dans le champ de la caméra. Il arrive cependant fréquemment que le cadrage automatique ainsi opéré génère des modifications abruptes de l'image lors de l'affichage, dont notamment des effets de saccades entraînant une impression de mouvement robotisé du ou des sujets, de nature à rendre la visualisation peu agréable. En effet, le cadrage réalisé suit l'utilisateur en reproduisant un déplacement à vitesse constante. Ces artéfacts sont généralement liés à des aléas relatifs aux techniques de détection d'un ou plusieurs sujets, appliquées à un flux vidéo.
Le document US 2022/198774 A1 traite d'un système et d'une méthode pour réaliser un suivi d'une ou plusieurs régions d'intérêt d'un flux vidéo issu d'une caméra.
La situation peut être améliorée.

EXPOSE DE L'INVENTION

L'invention est définie par les revendications indépendantes et a pour but d'améliorer le rendu d'un sujet lors d'une visioconférence en opérant un recadrage amélioré du sujet dans un flux vidéo en vue d'une restitution de ce flux vidéo sur un dispositif afficheur.
A cet effet, l'invention a pour objet un procédé de sélection de portions d'images à restituer, à partir d'un flux vidéo comprenant une pluralité d'images comprenant chacune une représentation d'un sujet, le procédé comprenant les étapes de :

- détermination de limites d'une première portion d'image comprenant ledit sujet,
- détermination d'un facteur de zoom cible parmi une pluralité de facteurs de zoom à partir desdites limites, d'un facteur de zoom courant et d'au moins une résolution maximale desdites images,
- détermination de coordonnées cibles d'une deuxième portion d'image, représentative du sujet, obtenue à partir de la première portion d'image, par un recadrage opéré en fonction du facteur de zoom cible déterminé et de ladite au moins une résolution maximale.

Avantageusement, il est ainsi possible d'éviter des effets de saccades et de tremblements lors de la restitution d'une portion d'image illustrant au moins un interlocuteur, après recadrage, lors d'une visioconférence.
Avantageusement, le procédé de sélection de portions d'image comprend en outre, postérieurement à l'étape de détermination de coordonnées cibles :

- une détermination de coordonnées d'affichage de la deuxième portion d'image à partir desdites coordonnées cibles et de coordonnées d'affichage antérieures utilisées pour un affichage d'une troisième portion d'image sur un afficheur, et,
- un affichage de la deuxième portion d'image sur l'afficheur.

Le procédé selon l'invention peut également comporter les caractéristiques suivantes, considérées seules ou en combinaison :

- La détermination de limites de la première portion d'image comprend un filtrage temporel opéré à partir d'une pluralité d'images du flux vidéo.
- La détermination de coordonnées d'affichage d'une deuxième portion d'image comprend un filtrage temporel opéré à partir d'une pluralité de coordonnées d'affichage antérieures utilisées pour un affichage de portions d'images.
- La détermination d'un facteur de zoom cible est opérée en utilisant un mécanisme d'hystérésis.
- Le procédé comprend en outre une utilisation d'une pluralité de deuxièmes facteurs de zoom et comprend une modification d'au moins l'un des deuxièmes facteurs de zoom de la pluralité de deuxièmes facteurs de zoom en fonction d'au moins le facteur de zoom cible déterminé.

- La modification d'au moins l'un des deuxièmes facteurs de zoom utilise une méthode de modification d'une suite de données selon une variante de l'algorithme dit «Adaptive Neural Gas ».

L'invention a également pour objet un système de sélection de portions d'images comprenant une interface de réception d'un flux vidéo comprenant une pluralité d'images comprenant chacune une représentation d'un sujet, et des circuits électroniques configurés pour :

- déterminer des limites d'une première portion d'une image comprenant le sujet,
- déterminer un facteur de zoom cible parmi une pluralité de facteurs de zoom à partir des limites déterminées, d'un facteur de zoom courant et d'au moins une résolution maximale d'images,
- déterminer des coordonnées cibles de la première portion d'image recadrée en fonction du facteur de zoom cible déterminé et d'au moins une résolution d'images. Selon un mode de réalisation, le système de sélection de portions d'images comprend en outre des circuits électroniques configurés pour :
- déterminer des coordonnées d'affichage d'une deuxième portion d'image, représentative du sujet, obtenue par un recadrage opéré en fonction du facteur de zoom cible, des coordonnées cibles et de coordonnées d'affichage antérieures utilisées pour un affichage d'une troisième portion d'image sur un afficheur, et,
- afficher la deuxième portion d'image sur l'afficheur.

L'invention concerne en outre un système de visioconférence comprenant un système de sélection de portions d'images tel que précédemment décrit.

L'invention concerne enfin un programme d'ordinateur comprenant des instructions de codes de programme pour exécuter les étapes du procédé décrit lorsque le programme est exécuté par un processeur, ainsi qu'un support de stockage d'informations comprenant un tel produit programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement des images successives d'un flux vidéo généré par un dispositif de capture d'images ;
[Fig. 2] illustre des opérations de détection d'un sujet dans les images du flux vidéo déjà illustré sur la Fig. 1 ;
[Fig. 3] illustre un dispositif d'affichage d'images configuré pour la visioconférence ;
[Fig. 4] illustre schématiquement une portion d'image extraite du flux vidéo illustré sur la Fig. 1 représentée sur un afficheur du dispositif d'affichage de la Fig. 3 ;
[Fig. 5] illustre schématiquement un recadrage d'image permettant de restituer la portion d'image représentée sur la Fig. 4, avec un facteur de zoom, sur l'afficheur du dispositif d'affichage de la Fig. 3 ;
[Fig. 6] est un ordinogramme illustrant des étapes d'un procédé d'affichage d'une portion d'image, avec recadrage, selon un mode de réalisation ;
[Fig. 7] illustre schématiquement une architecture globale d'un dispositif ou d'un système configuré pour exécuter le procédé illustré sur la Fig. 6 ; et,
[Fig. 8] est un ordinogramme illustrant des étapes de sélection d'un facteur de zoom selon un mode de réalisation.

EXPOSE DETAILLE DE MODES DE REALISATION

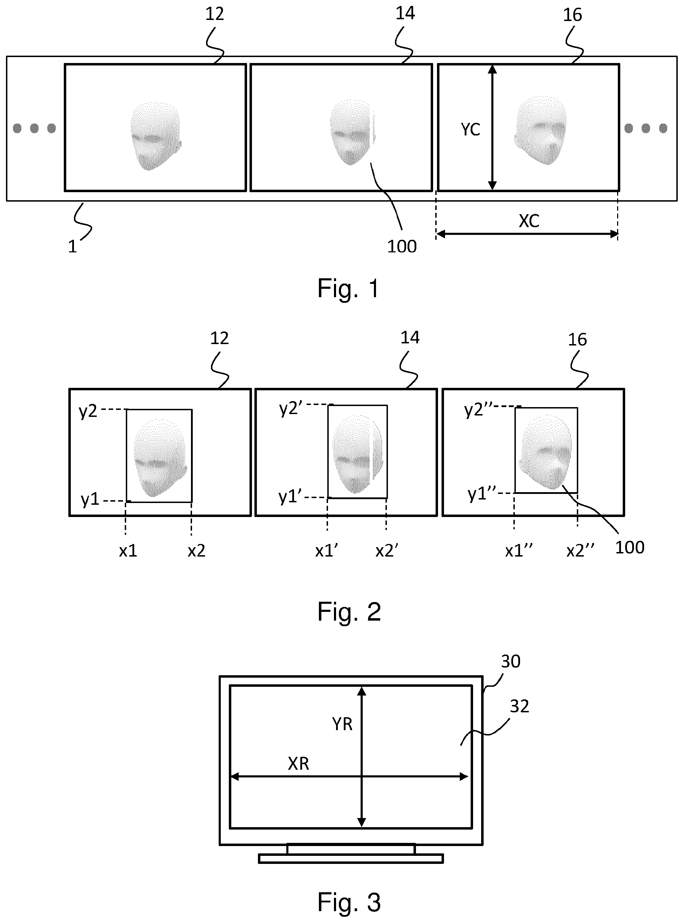

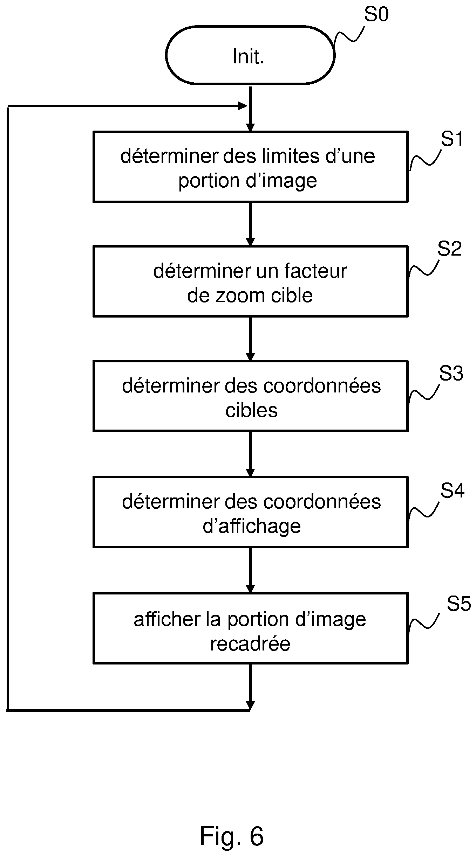

Le procédé de sélection de portions d'images en vue d'un affichage, objet de l'invention, permet d'opérer un cadrage automatisé et optimisé d'un sujet (par exemple un interlocuteur) lors d'une session de visioconférence. Le procédé comprend des étapes illustrées sur la Fig. 6 et détaillées plus loin dans les paragraphes de description en relation avec la Fig. 6. Les Fig. 1 à Fig. 5 illustrent globalement certaines de ces étapes pour en faciliter la compréhension.

La Fig. 1 illustre schématiquement une portion d'un flux vidéo 1 comprenant une succession d'images. A des fins de simplification, seules trois images 12, 14 et 16 sont représentées, bien que le flux comprenne un grand nombre d'images successives, parmi lesquelles se trouvent les images successives 12, 14 et 16. Selon un mode de réalisation, le flux vidéo 1 est généré par un dispositif de capture d'images, tel qu'une caméra opérant à un rythme de capture de 30 images par seconde. Bien évidemment, cet exemple n'est pas limitatif et le flux vidéo 1 pourrait être généré par un dispositif opérant à une autre fréquence de capture d'images, telle que 25 images par seconde ou encore 60 images par seconde. Le flux vidéo 1 tel que représenté sur la Fig. 1 est une illustration de principe visant à permettre une compréhension rapide du procédé d'affichage selon l'invention. Bien évidemment, les images 12, 14 et 16 sont en pratique codées sous la forme d'une suite de données issues d'un processus d'encodage selon un format dédié et le flux vidéo 1 comprend de nombreuses informations visant à décrire l'organisation de ces données dans le flux vidéo 1, y compris d'un point de vue temporel, ainsi que des informations utiles à leur décodage et à leur restitution par un dispositif de décodage et de restitution. Dans la présente description, les termes « affichage » et « restitution » désignent tous deux le fait de restituer le flux vidéo recadré ou non sur un dispositif d'affichage. Le flux vidéo 1 peut comprendre en outre des données audio, représentatives d'un environnement sonore, synchronisées avec les données vidéo. De telles données audio ne sont pas décrites ici dans la mesure où le procédé d'affichage décrit ne concerne pas la restitution sonore, mais uniquement la restitution vidéo. Selon un mode de réalisation, chacune des images 12, 14 et 16 du flux vidéo 1 présente une résolution horizontale XC et une résolution verticale YC et comprend des éléments représentatifs d'un sujet 100 c'est-à-dire d'un utilisateur d'un système de visioconférence ayant opéré la capture des images 12, 14 et 16, ainsi que d'éventuelles images précédentes présentes dans le flux vidéo 1. Selon un mode de réalisation, la résolution des images du flux vidéo 1 est 720 x 576 ; c'est-à-dire XC = 720 et YC = 576. Cet exemple n'est pas limitatif et les images 12, 14 et 16 pourraient aussi bien comprendre des éléments représentatifs de plusieurs sujets présents dans le champ de capture du dispositif de capture du système de visioconférence. En outre, la résolution des images produites par le dispositif de capture pourrait être différente de celle selon l'exemple de réalisation.

La Fig. 2 illustre un résultat d'une étape de détection automatique visant à déterminer des limites d'une première portion d'une image du flux vidéo 1 comprenant un sujet 100 filmé par un dispositif de capture d'image lors d'une session de visioconférence.

Selon l'exemple décrit, un module de détection automatique opère, à partir du flux vidéo 1 comprenant une succession d'images illustrant le sujet 100, une détection d'une zone de l'image comprenant et délimitant le sujet 100 pour chacune des images du flux vidéo 1. En d'autres termes, il s'agit d'une fonction de détection automatique de sujet à partir d'un flux vidéo opérant à partir du flux vidéo 1.

Selon l'exemple décrit, seul le visage du sujet et le haut de son buste sont visibles dans le champ de la caméra utilisée et le sujet est donc ici illustré par son visage. Cet exemple n'est pas limitatif et la détection du sujet pourrait opérer une détection d'une personne dans son ensemble, ou de toute la partie visible d'une personne (la moitié supérieure de son corps lorsqu'elle est assise à un bureau, par exemple). Selon un autre exemple de variante, et comme déjà indiqué, la détection pourrait s'appliquer à plusieurs personnes présentes dans le champ de la caméra. Selon cette variante, le sujet détecté comprend alors lesdites plusieurs personnes détectées. En d'autres termes, si plusieurs personnes sont détectées dans une image du flux vidéo 1, elles peuvent être traitées comme un sujet unique pour les opérations subséquentes.

Selon un mode de réalisation, la détection du sujet est réalisée en exécutant un algorithme de détection d'objet mettant en œuvre une technique dite de « *machine learning* » utilisant un réseau de neurones, tel que le réseau de neurones *DeepLabV3* ou le réseau de neurones *BlazeFace,* ou encore un algorithme implémentant la méthode de Viola et Jones. Selon l'exemple illustré, au moins une zone de type « boîte englobante » comprenant le sujet 100 est ainsi définie pour chacune des images 12, 14 et 16 et une telle boîte englobante est définie par des coordonnées x (en abscisse) et y (en ordonnée) de l'une de ses diagonales. Ainsi, par exemple, une boîte englobante définie par des points de coordonnées respectives x1, y1 et x2, y2 est déterminée pour l'image 12. De façon similaire, une boîte englobante définie par des points de coordonnées respectives x1', y1' et x2', y2' est déterminée pour l'image 14 et une boîte englobante définie par des points de coordonnées respectives x1", y1" et x2", y2" est déterminée pour l'image 16. Là encore, l'exemple décrit n'est pas limitatif, et certains systèmes ou modules de détection automatique de sujet dans une image présentent plusieurs boîtes englobantes par image, qui sont alors autant de propositions de boîte englobante potentiellement pertinentes pour situer un sujet d'intérêt détecté dans l'image concernée. Dans ce dernier cas, une boîte englobante « résultante » ou « finale » est déterminée de sorte à comprendre l'ensemble des boîtes englobantes proposées, tout en étant la plus petite possible. Par exemple, dans le cas où deux boîtes englobantes seraient présentées en sortie du module de détection de sujet, pour une image donnée, il est possible de retenir la coordonnée en abscisse la plus petite parmi les deux coordonnées d'abscisse et la plus petite parmi les deux coordonnées en ordonnée pour définir les coordonnées d'un premier point de la diagonale de la boîte englobante résultante. De façon similaire, il est possible de retenir la coordonnée la plus grande parmi les deux coordonnées d'abscisse et la coordonnée la plus grande parmi les deux coordonnées en ordonnée pour définir les coordonnées d'un deuxième point de la diagonale de la boîte englobante résultante. On se retrouve ainsi dans le cas où une seule boîte englobante, dite « boîte englobante finale » ou « boîte englobante résultante » est à considérer pour les opérations subséquentes.

Selon un mode de réalisation, les limites d'une portion d'une image comprenant le sujet 100 sont déterminées à partir des coordonnées des deux points de la diagonale de la boîte englobante déterminée pour cette image. Par exemple, les limites de la portion d'image comprenant le sujet 100 dans l'image 16 sont déterminées par les points de coordonnées respectives x1'', y1'' et x2'', y2''. Selon une variante, et aux fins de supprimer d'éventuelles erreurs de détection, un filtrage temporel est opéré en utilisant les coordonnées de boîtes englobantes de plusieurs images successives. Par exemple, des coordonnées de boîte englobante de l'image 16, et donc d'une portion d'image contenant le sujet 100 tel que présent dans l'image 16, sont déterminées à partir des coordonnées des points définissant une diagonale de boîte englobante pour les trois dernières images, en l'occurrence, les images 12, 14 et 16. Cet exemple n'est pas limitatif.

Selon un mode de réalisation préféré, une filtrage des coordonnées de la boîte englobante considérée pour la suite des traitements est opéré de sorte qu'une coordonnée Y' filtrée d'un point de référence d'une boîte englobante est définie à partir de la même valeur Y de coordonnée de la boîte englobante de l'image précédente, selon la formule :

$$Y_i = Y_{i-1} - \alpha\,(Y_{i-1} - Z_i)\ \text{avec}\ Z_0 = Y_0$$

où $\alpha$ est un coefficient de lissage défini de façon empirique,
$Y_i$ est la valeur lissée (filtrée) à l'instant i,
$Y_{i-1}$ est la valeur lissée (filtrée) à l'instant i-1,
$Z_i$ est la valeur en sortie du réseau de neurone à l'instant i,
selon une technique de lissage classiquement nommé « lissage exponentiel ».

Un tel filtrage est appliqué à chacune des coordonnées x1, y1, x2 et y2 d'une boîte englobante.

Il est donc appliqué aux coordonnées de la boîte englobante une méthode empirique de lissage et de prévision de données chronologiques affectées d'aléas. Chaque donnée est lissée successivement en partant de la valeur initiale, en donnant aux observations passées un poids décroissant exponentiellement avec leur ancienneté.

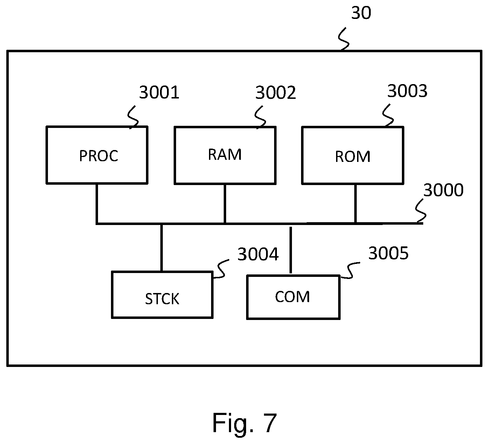

La Fig. 3 représente un dispositif d'affichage d'images 30, encore communément appelé dispositif de restitution, configuré pour restituer un flux vidéo capturé par un dispositif de capture d'images, et comprenant un module de contrôle d'affichage configuré pour exécuter un procédé optimisé d'affichage comprenant un procédé de sélection de portions d'images selon l'invention. Le dispositif d'affichage d'images 30, encore appelé ici dispositif d'affichage 30, comprend une interface d'entrée pour la réception d'un flux vidéo numérique tel que le flux vidéo 1, une unité de contrôle et de traitement (détaillée sur la Fig. 7) et un afficheur 32 présentant une résolution $XR \times YR$. Selon l'exemple décrit, le nombre d'éléments d'affichage (ou pixels) disposés horizontalement est 1900 (soit $XR = 1900$) et le nombre d'éléments d'affichage (ou pixels) disposés verticalement est 1080 (soit $YR = 1080$). En d'autres termes, l'afficheur 32 est une matrice de pixels de dimensions $1900 \times 1080$ pour laquelle chacun des pixels $P_{xy}$ peut être référencé par sa position exprimée en coordonnées x, y (abscisse x comprise entre 1 et 1900 et ordonnée y comprise entre 1 et 1080). Il en résulte qu'une portion d'image comprenant le sujet 100 d'une image du flux vidéo 1, lequel flux comprend des images de résolution $XC \times YC$, avec $XC < XR$ et $YC < YR$, peut dans de nombreux cas être affichée après agrandissement sur l'afficheur 32. La portion d'image extraite du flux vidéo est alors affichée sur l'afficheur 32 après recadrage puisque les dimensions et proportions de la portion d'image extraite du flux vidéo 1 et celle de l'afficheur 32 ne sont pas identiques. Le terme « recadrage » désigne ici un recadrage de type *'cropping',* c'est-à-dire après rognage d'une image d'origine du flux vidéo 1 pour ne conserver que la partie pouvant être affichée sur toute la surface utile de l'afficheur 32 lors d'une visioconférence. Il est à noter que la surface utile de l'afficheur 32 mise à disposition lors d'une visioconférence peut être un sous-ensemble de la surface réellement et physiquement disponible sur l'afficheur 32. En effet, des portions d'écran de l'afficheur 32 peuvent être réservées à l'affichage de menus contextuels ou encore d'éléments graphiques divers inclus dans une interface utilisateur (boutons, menus déroulants, vue d'un document, etc.).

Selon un mode de réalisation, le procédé de sélection de portions d'images n'est pas compris dans un dispositif de restitution tel que le dispositif de restitution 30, et opère dans un dispositif ou dans un système dédié, à partir du flux vidéo 1, lequel ne traite pas la restitution à proprement parler des portions d'images sélectionnées, mais opère seulement une transmission ou un enregistrement dans une mémoire tampon en vue d'un traitement ultérieur. Selon un mode de réalisation, un tel dispositif de traitement est intégré dans une caméra configurée pour capter des images en vue d'une visioconférence.

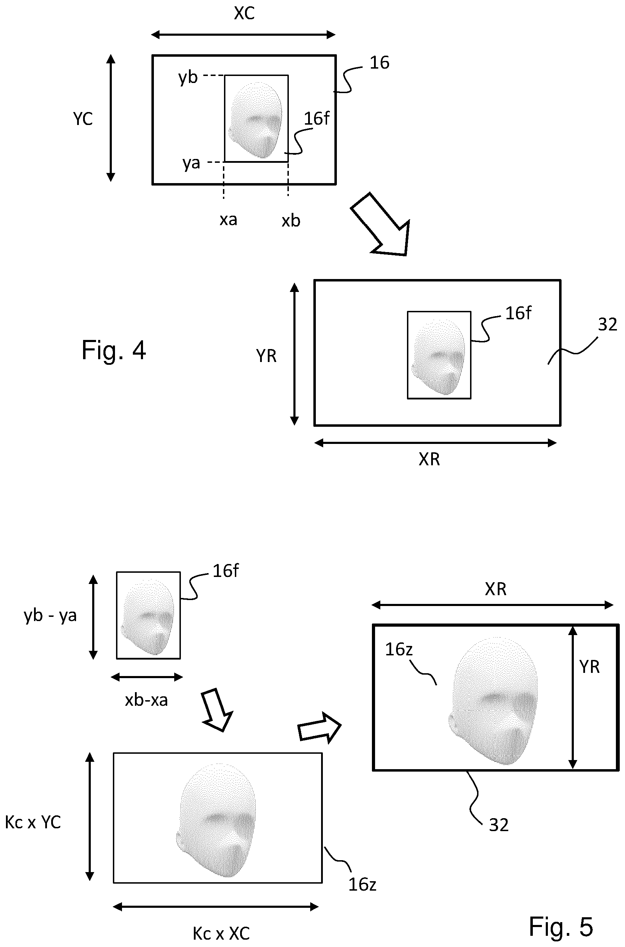

La Fig. 4 illustre schématiquement une détermination d'une portion 16f de l'image 16 du flux vidéo 1, délimitée par des limites référencées par deux points de coordonnées xa, ya et xb, yb. Comme déjà indiqué, les coordonnées xa, ya, xb et yb peuvent être définies à partir de coordonnées d'une boîte englobante d'une image donnée ou encore à partir de coordonnées respectives de plusieurs boîtes englobantes déterminées pour plusieurs images successives du flux vidéo 1 ou de plusieurs boîtes englobantes déterminées pour chacune des images du flux vidéo 1, auxquelles il est appliqué un lissage exponentiel tel que précédemment décrit.

La partie supérieure de la Fig. 4 illustre la portion 16f (contenant le sujet 100) telle que déterminée dans l'image 16 du flux vidéo 1 et la partie inférieure de la Fig. 4 illustre cette même portion 16f (contenant le sujet 100) affichée sur l'afficheur 32 dont la résolution $(XR \times YR)$ est par exemple supérieure à la résolution $(XC \times YC)$ des images du flux vidéo 1.

Il est possible de constater que, quel que soit le rapport de dimensionnement entre une image native du flux vidéo 1, de résolution XC, YC, et un dispositif d'affichage de résolution XR, YR, une portion d'intérêt sélectionnée d'une image comprenant un sujet d'intérêt, présente par essence une dimension inférieure aux dimensions maximales XC, YC de l'image d'origine et qu'une fonction de zoom peut alors être introduite par sélection d'une portion d'image d'intérêt choisie (« *cropping* ») puis par mise à la même échelle XC, YC que l'image d'origine de la portion d'image sélectionnée (« *upscaling* »).

Selon un mode de réalisation, la détermination d'une portion d'image d'intérêt dans une image est réalisée de sorte que la portion d'image d'intérêt, déterminée par des coordonnées cibles xta, yta, xtb et ytb, présente des dimensions dont le rapport (largeur / hauteur) est identique aux dimensions de l'image native (XC, YC) dans laquelle cette portion d'image est déterminée, puis cette portion est utilisée pour remplacer l'image native dont elle est extraite dans le flux vidéo 1 ou dans un flux vidéo secondaire produit à partir du flux vidéo 1 en opérant de tels remplacements.

Selon un mode de réalisation de l'invention, une détermination d'un facteur de zoom est opérée pour chacune des images successives du flux vidéo 1, qui consiste à déterminer les dimensions et les coordonnées cibles xta, yta, xtb et ytb d'une portion d'image sélectionnée, de sorte que cette portion d'image présente des proportions identiques à l'image native dont elle est extraite (et dont les dimensions sont XC, YC) et dans laquelle la boîte englobante unique déterminée, ou la boîte englobante finale déterminée est idéalement centrée (si cela est possible) ou à défaut, dans laquelle la boîte englobante est le plus centrée possible, horizontalement et/ou verticalement. Ainsi, par exemple, la sélection d'une portion d'image est opérée par *cropping* d'une portion d'image de dimensions 0.5 XC, 0.5 YC quand le facteur de zoom déterminé est 0.5. Selon un même raisonnement, la sélection d'une portion d'image est opérée par *cropping* d'une portion d'image de dimensions 0.75 XC, 0.75 YC quand le facteur de zoom déterminé est 0.75. De la même façon encore, la sélection d'une portion d'image est opérée par considération de l'image native entière de dimensions XC, YC quand le facteur de zoom déterminé est 1, c'est-à-dire que compte-tenu des dimensions de la boîte englobante, il n'est pas requis d'opérer des opérations de *cropping* et *d'upscaling.*

Le terme *cropping* signifie dans la présente description, une sélection d'une portion d'image dans une image native, donnant naissance à une nouvelle image, et le terme *upscaling* désigne la mise à l'échelle de cette nouvelle image obtenue par « découpe » d'une portion d'intérêt d'une image native et mise à une nouvelle échelle, telle que, par exemple, aux dimensions de l'image native ou éventuellement ultérieurement à d'autres dimensions en fonction des perspectives d'affichage envisagées.

Selon un mode de réalisation, un facteur d'agrandissement, encore appelé facteur de zoom, cible Kc dont une utilisation est illustrée sur la Fig. 5 est déterminé par sélection d'un facteur de zoom parmi une pluralité de facteurs de zoom K1, K2, K3 et K4 prédéfinis. Selon un mode de réalisation, et tel que déjà décrit, le facteur de zoom cible Kc est compris entre 0 et 1. Cela signifie par exemple que, dans le cas où le résultat de la soustraction yb - ya est plus grand que le résultat de la soustraction xb - xa, et donc que le sujet 100 présente une forme générale plutôt verticale qu'horizontale dans une image du flux vidéo 1, un facteur de zoom cible Kc correspond à un grossissement de la portion d'image 16f permettant un *upscaling* vers le format d'image natif XR × YR est applicable. Ainsi, selon un exemple, des facteurs de zoom prédéfinis sont, par exemple : K1 = 0,25 ; K2 = 0,50 ; K3 = 0,75 et K4 = 1. Il est alors possible de déterminer une portion d'image à sélectionner en vue d'une opération de *cropping,* présentant des dimensions Kc × XC, Kc × YC et d'opérer ensuite une mise à l'échelle pour retrouve un format natif XC × YC ou encore ultérieurement un format d'affichage XR × YR sur le dispositif de restitution 32, par exemple.

Selon un mode de réalisation, il est en outre possible de déterminer des coordonnées cibles de la portion d'image 16f de l'image 16 sur l'afficheur 32, selon des préférences d'affichage, ou en d'autres termes d'opérer des opérations d'*upscaling* en relation avec des caractéristiques de l'afficheur utilisé. Par exemple, des coordonnées cibles xta, yta, xtb et ytb peuvent être déterminées aux fins de centrer la portion d'image 16f contenant le sujet 100 sur la surface utile d'une image intermédiaire ou de l'afficheur 32. Des coordonnées cibles des points bas et haut d'une diagonale oblique de la portion 16f d'image 16 sur l'afficheur 32 sont par exemple xta, yta et xtb, ytb.

Selon un mode de réalisation, les coordonnées cibles xta, yta, xtb et ytb sont déterminées à partir des coordonnées xa, xb, ya, yb, des dimensions XC, YC et du facteur de zoom cible Kc selon les formules ci-après :

$$xta = (xa + xb - Kc \times XC) / 2 ;$$

$$xtb = (xa + xb + Kc \times XC) / 2 ;$$

$$yta = (ya + yb - Kc \times YC) / 2 ;$$

$$ytb = (ya + yb + Kc \times YC) / 2 ;$$

avec $0 \leq xta \leq xtb \leq Kc \times Xc$ et $0 \leq yta \leq ytb \leq Kc \times Yc$.

Avantageusement, selon un mode de réalisation, on compare le facteur de zoom cible Kc déterminé à des seuils prédéfinis de sorte à créer un mécanisme d'hystérésis. Il convient alors de considérer la valeur courante du facteur de zoom avec lequel est opéré un recadrage courant et de regarder si des conditions de changement de facteur de zoom cible Kc sont satisfaites, au regard des seuils d'hystérésis, pour changer de facteur de zoom (aller du facteur de zoom courant vers le facteur de zoom cible Kc).

Selon un exemple, pour passer par exemple du facteur de zoom K3 = 0,75 au facteur de zoom K2 = 0,50, il faut que la hauteur de la boîte englobante qui définit les limites de la portion d'image 16f soit inférieure ou égale au produit YR × K2 auquel on soustrait un seuil dit « seuil vertical » Kh, et que la largeur de cette boîte englobante soit inférieure ou égale à XR × K2 auquel on soustrait un seuil dit « seuil horizontal » Kw. Les seuils Kh et Kw sont appelés ici seuils d'hystérésis. Selon un mode de réalisation, un seuil K unique est défini de sorte que K = Kh = Kw = 90 (exprimé en nombre de pixels d'affichage).

A contrario, pour passer par exemple du facteur de zoom K2 = 0,5 au facteur de zoom K3 = 0,75, il faut que la hauteur de la boîte englobante dont il est question soit supérieure ou égale à YR × K2 auquel on ajoute le seuil Kh ou que la largeur de cette boîte englobante soit inférieure ou égale au produit YR × K2 auquel on ajoute le seuil Kw. Astucieusement, un nouveau filtrage est opéré sur les coordonnées cibles obtenues de la portion d'image à sélectionner (par une opération de *cropping),* de sorte à lisser le déplacement du sujet selon des portions d'images successivement affichées.

Selon un mode de réalisation, ce filtrage des coordonnées cibles de la portion d'image à cropper est opéré selon la même méthode que le filtrage progressif précédemment opéré sur chacune des coordonnées de points de référence de la boîte englobante. C'est-à-dire en appliquant la formule :

$$Y'_i = Y'_{i-1} - \alpha\,(Y'_{i-1} - Z'i)\ \text{avec } Z'_0 = Y'_0$$

où $\alpha$ est un coefficient de lissage défini de façon empirique,
$Y'_i$ est la valeur lissée (filtrée) à l'instant i,
$Y'_{i-1}$ est la valeur lissée (filtrée) à l'instant i-1,
$Z'_i$ est la valeur d'une coordonnée cible déterminée à l'instant i.

Avantageusement, et pour limiter des effets de « vibrations » ou « tremblements » lors de la restitution, si les différences entre les coordonnées cibles précédentes et les coordonnées cibles nouvellement définies de la portion d'image à sélectionner sont inférieures à un seuil prédéterminé, alors les coordonnées cibles nouvellement déterminées sont rejetées et la sélection d'une portion d'image en vue d'une opération de *cropping* est réalisée avec les coordonnées cibles précédemment définies et déjà utilisées.

Avantageusement, le procédé de sélection d'une portion d'image ainsi opéré permet d'éviter ou de limiter sensiblement les effets de pompage et de produire un effet de fluidité en dépit des modifications de facteur de zoom.

Selon un mode de réalisation, l'ensemble des opérations décrites ci-avant est réalisé pour chacune des images successives du flux vidéo 1 capturé.

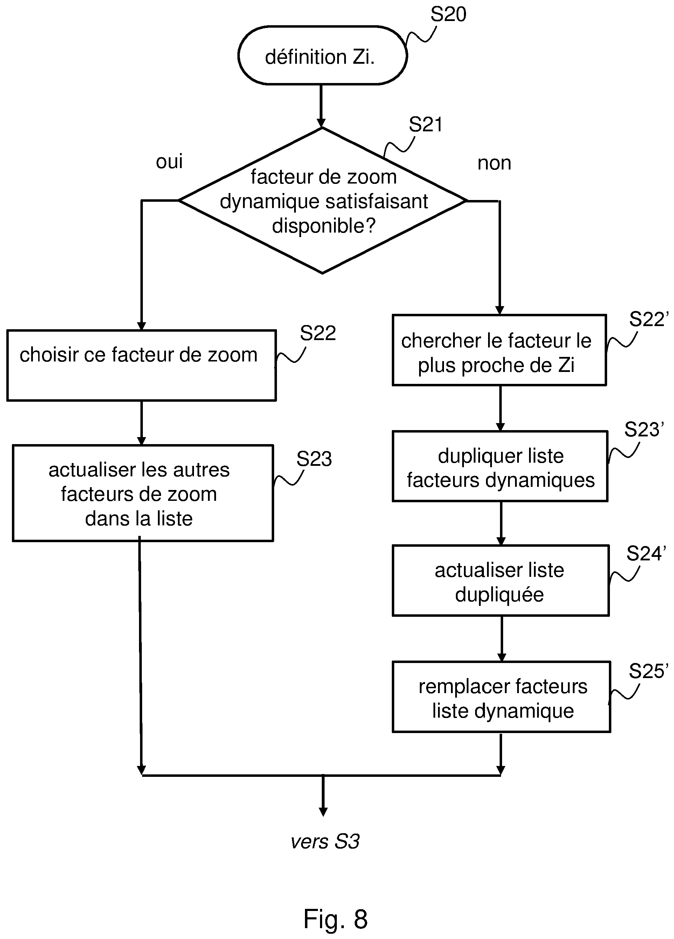

Selon une variante de réalisation, le facteur de zoom cible Kc n'est pas choisi uniquement parmi les facteurs de zoom prédéfinis (K1 à K4 dans l'exemple décrit) et d'autres facteurs de zoom, K1', K2', K3' et K4' ajustables dynamiquement, sont utilisés de sorte à choisir un facteur de zoom cible Kc parmi une pluralité de facteurs de zoom K1', K2', K3' et K4', en plus des facteurs de zoom K1 à K4, et dont les valeurs initiales sont respectivement K1 à K4 et qui évoluent potentiellement après chaque nouvelle détermination d'un facteur de zoom cible Kc. Selon un mode de réalisation, l'adaptation dynamique des facteurs de zoom utilise une méthode d'ajustement d'une série de données telle que la méthode dite « Adaptative Neural Gas » ou l'une de ses variantes. Cette méthode d'ajustement est détaillée plus loin, dans la partie descriptive en relation avec la Fig. 8.

La Fig. 6 illustre un procédé de sélection de portions d'images intégré à un procédé d'affichage optimisé opérant un recadrage du sujet 100 d'un utilisateur d'un système de visioconférence par le dispositif d'affichage 30 comprenant l'afficheur 32.

Une étape S0 constitue une étape initiale au terme de laquelle tous les circuits du dispositif d'affichage 30 sont normalement initialisés et opérationnels, par exemple après une mise sous tension du dispositif 30. A terme de cette étape S0, le dispositif 30 est configuré pour la réception d'un flux vidéo en provenance d'un dispositif de capture, tel qu'un outil de visioconférence. Selon l'exemple décrit, le dispositif d'affichage 30 reçoit le flux vidéo 1 comprenant une succession d'images au rythme de 30 images par seconde, parmi lesquelles les images 12, 14 et 16. Lors d'une étape S1, un module d'analyse et de détection d'objets interne au dispositif d'affichage 30 opère, pour chacune des images du flux vidéo 1, une détection de sujet. Selon l'exemple décrit, le module utilise une technique de détection d'objets dans laquelle l'objet à détecter est un sujet (une personne) et fournit les coordonnées xa, ya et xb, yb de points de la diagonale d'une boîte englobante dans laquelle le sujet est présent. Ainsi, si le flux comprend une représentation du sujet 100, la détermination des limites d'une portion d'image comprenant cette représentation du sujet 100 est effectuée et le sujet 100 est compris dans une portion d'image rectangulaire (ou carrée) dont le coin inférieur gauche présente les coordonnées xa, ya (abscisse et ordonnée dans le référentiel de l'image) et le coin supérieur droit présente les coordonnées xb, yb (abscisse et ordonnée dans le référentiel de l'image). Selon un mode de réalisation, si une image comprend plusieurs sujets, alors une boîte englobante est déterminée pour chacun des sujets et un traitement est opéré sur l'ensemble de boîtes englobantes pour définir une boîte englobante finale dite « résultante » qui comprend toutes les boîtes englobantes déterminées pour cette image (on retient, par exemple, le coin de boîte le plus en bas à gauche et le coin de boîte le plus en haut à droite comme points définissant une diagonale de la boîte englobante finale).

Selon un mode de réalisation, le module de détection d'objets (ici, de sujets) comprend une implémentation logicielle ou matérielle d'un réseau de neurones artificiels profond ou de type DCNN (du sigle anglais "Deep Convolutional Neural Network"). Un tel module DCNN peut être constitué d'un ensemble de nombreux neurones artificiels, de type convolutif ou de type perceptron, et organisés par couches successives connectées entre elles. Un tel module DCNN s'inspire classiquement d'un modèle simpliste du fonctionnement d'un cerveau humain où de nombreux neurones biologiques sont connectés entre eux par des axones.

Par exemple, un module dit YOLOv4 (du sigle anglais « You Only Look Once version 4 ») est un module de type DCNN qui permet d'opérer une détection d'objets dans des images, et dit "à une étape" (ou encore One-Stage), c'est-à-dire dont l'architecture est composée d'un module unique de propositions combinées de rectangles encadrant des objets (« bounding boxes ») et de classes d'objets dans l'image. En plus des neurones artificiels précédemment décrits, YOLOv4 utilise des fonctions connues de l'homme du métier comme par exemple la normalisation des lots (ou "batch normalization" en anglais), la régularisation par coupure de blocs de pixels (ou "dropblock regularization" en anglais), des connexions résiduelles pondérées entre couches (ou "weighted residual connections") ou encore une étape de suppression non-maximale (ou "non-maximal suppression" en anglais) qui élimine les propositions redondantes d'objets détectés.

Selon un mode de réalisation, le module de détection de sujets a la possibilité de prédire une liste de sujets présents dans les images du flux vidéo 1 en fournissant, pour chaque sujet, un rectangle encadrant l'objet sous forme de coordonnées de points définissant le rectangle dans l'image, le type ou classe de l'objet parmi une liste prédéfinie de classes définies lors d'une phase d'apprentissage, et un score de détection représentant un degré de confiance dans la détection ainsi opérée. Un facteur de zoom cible est alors défini pour chacune des images du flux vidéo 1, telles que l'image 16, lors d'une étape S2, à partir du facteur de zoom courant, des dimensions (limites) de la boîte englobante comprenant une représentation du sujet 100, et de la résolution XC $\times$ YC des images natives (du flux vidéo 1). Avantageusement, la détermination du facteur de zoom cible utilise un mécanisme d'hystérésis précédemment décrit pour empêcher des phénomènes visuels de pompage lors de la restitution du flux vidéo recadré. Le mécanisme d'hystérésis utilise les seuils Kw et Kh, ou encore un seuil unique K = Kh = Kw. Il est alors possible de déterminer lors d'une étape S3, des coordonnées cibles xta, yta, xtb et ytb, qui définissent les points de la portion d'image délimitée par une boîte englobante, après recadrage, et en utilisant le facteur de zoom cible déterminé. Selon un mode de réalisation, les coordonnées cibles sont définies pour opérer un centrage de la portion d'image contenant la représentation du sujet 100 dans une image intermédiaire, en vue d'une restitution sur l'afficheur 32. Ces coordonnées cibles xta, yta, xtb et ytb, sont en pratique des coordonnées vers lesquelles doit tendre l'affichage de la portion d'image recadrée 16z à l'aide du facteur de zoom cible Kc. Astucieusement, des coordonnées finales d'affichage xtar, ytar, xtbr et ytbr sont déterminées lors d'une étape **S4** en procédant à un filtrage temporel des coordonnées cibles obtenues, c'est-à-dire en tenant compte de coordonnées d'affichage xtar', ytar', xtbr' et ytbr' utilisées pour des images précédentes (et donc des portions d'images recadrées précédentes) dans le flux vidéo 1 ; c'est-à-dire pour afficher des portions d'images du flux vidéo 1 recadrées selon le même procédé, sur l'afficheur 32. Selon un mode de réalisation de l'invention, une « trajectoire » courbe est déterminée qui regroupe, pour chacune des coordonnées, des valeurs antérieures et qui converge vers la valeur de coordonnée cible déterminée. Avantageusement, cela permet d'obtenir une restitution bien plus fluide que lors d'une restitution selon les méthodes de l'art antérieur.

Selon un mode de réalisation, les coordonnées finales d'affichage sont déterminées à partir des coordonnées cibles xta, xtb, ytab à partir de coordonnées finales antérieures et d'un coefficient $\alpha 2$ de lissage selon les formules ci-après :

$$\mathrm{xtar} = \alpha 2 \times \mathrm{xta} + (1 - \alpha 2) \times \mathrm{xtar'} \; ;$$

$$\mathrm{xtbr} = \alpha 2 \times \mathrm{xtb} + (1 - \alpha 2) \times \mathrm{xtbr'} \; ;$$

$$\mathrm{ytar} = \alpha 2 \times \mathrm{yta} + (1 - \alpha 2) \times \mathrm{ytar'} \; ;$$

$$\mathrm{ytbr} = \alpha 2 \times \mathrm{ytb} + (1 - \alpha 2) \times \mathrm{ytbr'} \; ;$$

où $\alpha2$ est un coefficient de filtrage défini de façon empirique, et selon un principe de filtrage progressif selon lequel :

$$Y'_i = Y'_{i-1} - \alpha2 \ (Y'_{i-1} - Z'i) \text{ avec } Z'_0 = Y'_0$$

où $\alpha$ est un coefficient de lissage défini de façon empirique,
$Y'_i$ est la valeur lissée (filtrée) à l'instant i,
$Y'_{i-1}$ est la valeur lissée (filtrée) à l'instant i-1,
$Z'_i$ est la valeur d'une coordonnée finale d'affichage déterminée à l'instant i.

Enfin, lors d'une étape **S5**, la portion d'image recadrée (16z, selon l'exemple décrit) est redimensionnée pour passer d'une zone « coupée » à une zone d'affichage et être affichée dans une zone déterminée par les coordonnées d'affichage obtenues après filtrage, puis le procédé reboucle à l'étape S1 pour le traitement de l'image suivante du flux vidéo 1.

Selon un mode de réalisation, les coordonnées d'affichage déterminées correspondent à un affichage plein écran, c'est-à-dire que chacune des portions d'images respectivement sélectionnées dans une image est convertie par une opération *d'upscaling* au format natif XC × YC et remplace l'image native dont elle est extraite dans le flux vidéo 1 d'origine ou dans un flux vidéo secondaire utilisé pour un affichage sur le dispositif d'affichage 32. Selon un mode de réalisation, lorsque le facteur de zoom cible Kc est défini en utilisant, outre les facteurs de zoom fixes K1 à K4, les facteurs de zoom K1' à K4' ajustables dynamiquement, l'ajustement d'un des facteurs de zoom K1' à K4' est opéré selon une variante de la méthode dite « Adaptive Neural Gas », c'est-à-dire, en utilisant, pour chaque facteur de zoom Kn' ajustable dynamiquement, l'affectation $Kn' = Kn' + \varepsilon * e^{(-n'/\lambda)} (Kc - Kn')$ où $\varepsilon$ est le taux d'adaptation et $\lambda$ la taille du voisinage, jusqu'à ce que l'un des facteurs de zoom ajustables dynamiquement soit proche du facteur de zoom cible Kc. Selon un mode de réalisation, le système de *visioconférence* exécutant le procédé opère une analyse de la scène représentée par les images successives du flux vidéo 1 et enregistre les valeurs des facteurs de zoom définis dynamiquement en les enregistrant en référence à des informations représentatives de cette scène. Ainsi, si au début d'une nouvelle session de visioconférence, le système peut reconnaître la même scène (le même environnement de capture vidéo, il peut avantageusement réutiliser sans délai les facteurs de zoom K1', K2', K3' et K4' enregistrés sans avoir à les redéfinir. Une analyse des scènes présentes dans des flux vidéo peut être réalisée en utilisant par exemple des réseaux neuronaux tels que *« Topless MobileNetV2 »* ou des réseaux de similarité entraînés sur des *« Triplet Loss »*. Selon un mode de réalisation, deux scènes sont considérées comme étant similaires si la distance entre leurs *embeddings* est inférieure à un seuil de distance prédéterminé.

Selon un mode de réalisation, une résolution intermédiaire de transmission XT × YT est déterminée pour redimensionner la « zone coupée » avant transmission, ce qui permet ensuite de transmettre la zone coupée à cette résolution intermédiaire XT × YT. Selon ce mode de réalisation, la zone coupée transmise est ensuite redimensionnée à la résolution d'affichage XD × YD.

La Fig. 8 illustre une méthode d'ajustement dynamique de facteurs de zoom déterminés dans une liste de facteurs de zoom dits « dynamiques ». Cette méthode s'insère dans le procédé de sélection de portions d'images comme une variante de réalisation de l'étape S2 du procédé décrit en relation avec la Fig. 6. Dans la description de cette méthode, ci-après, on nomme « liste statique » une liste des facteurs de zoom fixes, dits « statiques » et on nomme « liste dynamique » une liste des facteurs de zoom dits « dynamiques » (ajustables). Une étape initiale S20 correspond à la définition d'un facteur de zoom cible idéal Kc à partir des dimensions de la boîte englobante, des dimensions de l'image native XC et YC, et du facteur de zoom courant. Lors d'une étape S21, il est déterminé si un facteur de zoom dynamique satisfaisant est disponible, c'est-à-dire si un facteur de zoom de la liste dynamique est proche du facteur de zoom Kc idéal. Pour ce faire, deux facteurs de zoom sont considérés comme étant proches l'un de l'autre si leur différence Kc-Kn, en valeur absolue, est inférieure à un seuil T prédéterminé. Selon un exemple, ce seuil T est égal à 0,1.

Dans le cas où un facteur de zoom dynamique est trouvé proche du facteur de zoom idéal Kc, on choisit ce facteur de zoom lors d'une étape S22 puis une actualisation des autres valeurs de la liste dynamique est réalisée lors d'une étape S23, grâce à une variante de l'algorithme dit Neural Gas. La détermination des coordonnées cibles est ensuite réalisée lors de l'étape S3 déjà décrite en rapport avec la Fig. 6.

La variante de l'algorithme Neural Gas est différente de ce dernier en ce sens qu'elle n'opère une mise à jour que des valeurs de la liste autres que celle identifiée comme étant proche, et non pas de cette dernière.

Dans le cas où aucune valeur de la liste dynamique n'est déterminée comme étant suffisamment proche du facteur de zoom idéal Kc, à l'étape S21, une recherche du facteur de zoom le plus proche du facteur de zoom idéal Kc est recherché lors d'une étape S22' dans les deux listes de facteurs de zoom ; c'est-à-dire à la fois dans la liste dynamique et dans la liste statique. Lors d'une étape S23', on duplique alors la liste dynamique, sous forme de liste temporaire, dite « liste tampon », en vue d'opérer des modifications de la liste dynamique. On actualise alors la liste tampon par exécutions successives, lors d'une étape S24', de l'algorithme Neural Gas, jusqu'à obtenir la présence dans la liste tampon d'une valeur de facteur de zoom Kp satisfaisant la contrainte de proximité qu'est une valeur absolue de la différence Kc - Kp inférieure au seuil de proximité T. Dès lors qu'une telle valeur Kp est obtenue dans la liste tampon, les valeurs de la liste dynamique sont remplacées par les valeurs de rang identique de la liste tampon lors d'une étape S25'. Ainsi, dans l'itération suivante de l'étape S2 du procédé représenté en rapport avec la Fig. 6, le niveau choisi sera Kp.

Le procédé continue ensuite en séquence et la détermination des coordonnées cibles est ensuite réalisée lors de l'étape S3 déjà décrite en rapport avec la Fig. 6.

Une actualisation de valeurs de la liste dynamique au moyen de la variante de l'algorithme Neural Gas consiste à mettre à jour, pour chaque facteur de zoom de la liste dynamique à actualiser, une affectation $Kn' = Kn' + \varepsilon \, e(-n'/\lambda) \, (Kc - Kn')$ où $n' = 0$ indique le facteur le plus proche du facteur cible, $\varepsilon$ est le taux d'adaptation et $\lambda$ la taille du voisinage, jusqu'à ce que l'un des facteurs de zoom ajustables dynamiquement soit suffisamment proche du facteur de zoom cible Kc. Selon un mode de réalisation, $\varepsilon$ et $\lambda$ sont définis de façon empirique est ont pour valeurs $\varepsilon=0,2$ et $\lambda= 1 / 0,05$.

Selon une variante de réalisation, les valeurs $\varepsilon$ et $\lambda$ sont réduites au fur et à mesure des opérations en les multipliant par un facteur inférieur à 1, dit « *decay factor* », dont la valeur est par exemple 0,995.

Les modifications que présente cette variante de l'algorithme Neural Gas par rapport à l'algorithme d'origine résident dans le fait que lorsque le procédé opère une actualisation de facteurs dynamiques lors de l'étape S23 après l'étape S21, l'un des facteurs dynamiques n'est pas actualisé. En effet, le plus proche, qui remplit la condition de proximité avec le facteur cible Kc, n'est pas actualisé.

Il est à noter que selon un mode de réalisation, une mesure de « sécurité » est appliquée en veillant à conserver une distance minimale et une distance maximale entre les valeurs de chacun des facteurs de zoom dynamiques. Pour ce faire, si la norme de la différence entre une nouvelle valeur calculée d'un facteur de zoom et une valeur d'un facteur de zoom voisin dans la liste dynamique est inférieure à un seuil prédéfini (par exemple 10% d'une dimension en largeur d'une image native), alors l'ancienne valeur est conservée lors de la phase d'actualisation.

Selon un raisonnement similaire, si la différence entre deux niveaux de zoom excède 50% d'une dimension en largeur de l'image native, alors l'actualisation est rejetée.

La Fig. 7 illustre schématiquement un exemple d'architecture interne du dispositif d'affichage 30. Considérons à titre illustratif que la Fig. 7 illustre un agencement interne du dispositif d'affichage 30. Selon l'exemple d'architecture matérielle représenté à la Fig. 7, le dispositif d'affichage 30 comprend alors, reliés par un bus de communication 3000 : un processeur ou CPU (« Central Processing Unit » en anglais) 3001 ; une mémoire vive RAM (« Random Access Memory » en anglais) 3002 ; une mémoire morte ROM (« Read Only Memory » en anglais) 3003 ; une unité de stockage telle qu'un disque dur (ou un lecteur de support de stockage, tel qu'un lecteur de cartes SD (« Secure Digital » en anglais) 3004 ; au moins une interface de communication 3005 permettant au dispositif d'affichage 30 de communiquer avec d'autres dispositifs auxquels il est relié, tels que des dispositifs visioconférence, par exemple, ou plus largement des dispositifs de communication par réseau de communication.

Selon un mode de réalisation, l'interface de communication 3005 est également configurée pour le contrôle de l'afficheur interne 32.

Le processeur 3001 est capable d'exécuter des instructions chargées dans la RAM 3002 à partir de la ROM 3003, d'une mémoire externe (non représentée), d'un support de stockage (tel qu'une carte SD), ou d'un réseau de communication. Lorsque le dispositif d'affichage 30 est mis sous tension, le processeur 3001 est capable de lire de la RAM 3002 des instructions et de les exécuter. Ces instructions forment un programme d'ordinateur causant la mise en œuvre, par le processeur 3001, de tout ou partie d'un procédé décrit en relation avec la Fig. 6 ou des variantes décrites de ce procédé.

Tout ou partie des procédés décrits en relation avec la Fig. 6 ou leurs variantes décrites, peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En outre, au moins un accélérateur neuronal de type NPU peut être utilisé pour tout ou partie des calculs à effectuer. En général, le dispositif d'affichage 30 comprend de la circuiterie électronique configurée pour mettre en œuvre les procédés décrits en relation avec lui-même. Bien évidemment, le dispositif d'affichage 30 comprend en outre tous les éléments usuellement présents dans un système comprenant une unité de contrôle et ses périphériques, tels qu'un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

**Revendications**

1. Procédé de sélection de portions (12z, 14z, 16z) d'images (12, 14, 16) à restituer, à partir d'un flux vidéo (1) comprenant une pluralité d'images (12, 14, 16) dites images natives, comprenant chacune une représentation d'un sujet d'intérêt (100), le procédé comprenant une

   - détermination (S1) de limites (xa, xb, ya, yb) d'une première portion (16f) d'image (16) comprenant ledit sujet d'intérêt (100), le procédé étant **caractérisé en ce qu'**il comprend en outre les étapes :
   - détermination (S2) d'un facteur de zoom cible (Kc) parmi une liste de facteurs de zoom prédéterminés (K1, K2, K3, K4, K1', K2', K3', K4') à partir desdites limites (xa, xb, ya, yb), d'un facteur de zoom courant et d'au moins une résolution maximale (XC, YC) desdites images natives (12, 14, 16), ladite pluralité de facteur de zoom prédéterminés comprenant des facteurs de zoom prédéterminés fixes (K1, K2, K3, K4) et des deuxièmes facteurs de zoom, prédéterminés, ajustables dynamiquement (K1', K2', K3', K4') après chaque détermination d'un facteur de zoom cible (Kc), selon une méthode d'ajustement d'une série de données,
   - détermination (S3) de coordonnées cibles (xta, yta, xtb, ytb) d'une deuxième portion (16z) d'image (16), représentative dudit sujet (100), obtenue à partir de ladite première portion (16f) d'image (16), par un recadrage opéré en fonction dudit facteur de zoom cible (Kc) déterminé et de ladite au moins une résolution maximale desdites images natives (12, 14, 16).

2. Procédé de sélection de portions d'images selon la revendication 1, lequel procédé comprend en outre, postérieurement à l'étape (S3) de détermination de coordonnées cibles :

   - une détermination (S4) de coordonnées d'affichage (xtar, ytar, xtbr, ytbr) de ladite deuxième portion (16z) d'image (16) à partir desdites coordonnées cibles (xta, yta, xtb, ytb) et de coordonnées d'affichage (xtar', ytar', xtbr', ytbr') antérieures utilisées pour un affichage d'une troisième portion (14z) d'image (14) sur un afficheur (32), et,
   - un affichage (S5) de ladite deuxième portion (16z) d'image (16) sur ledit afficheur (32).

3. Procédé de sélection de portions d'images selon la revendication 2, dans lequel ladite détermination de coordonnées d'affichage (xtar, ytar, xtbr, ytbr) d'une deuxième portion (16z) d'image (16) comprend un filtrage temporel opéré à partir d'une pluralité de coordonnées d'affichage antérieures utilisées pour un affichage de portions (12z, 14z) d'images (12, 14).

4. Procédé de sélection de portions d'images selon l'une des revendications 1 à 3, dans lequel ladite détermination de limites de ladite première portion (16f) d'image (16) comprend un filtrage temporel opéré à partir d'une pluralité d'images (12, 14, 16).

5. Procédé de sélection de portions d'images selon l'une des revendications 1 à 4, dans lequel ladite détermination d'un facteur de zoom cible (Kc) est opérée en utilisant un mécanisme d'hystérésis.

6. Procédé de sélection de portions d'images selon l'une des revendications 1 à 5, comprenant une modification d'au moins l'un des deuxièmes facteurs de zoom de ladite pluralité de deuxièmes facteurs de zoom (K1', K2', K3', K4') en fonction d'au moins ledit facteur de zoom cible (Kc).

7. Procédé de sélection de portions d'images selon la revendication 6, dans lequel ladite modification d'au moins l'un des deuxièmes facteurs de zoom utilise une méthode de modification d'une suite de données selon un algorithme d'un type dit « Adaptive Neural Gas ».

8. Produit programme d'ordinateur, **caractérisé en ce qu'**il comprend des instructions de codes de programme pour exécuter les étapes du procédé selon l'une quelconque des revendications 1 à 7, lorsque ledit programme est exécuté par un processeur.

9. Support de stockage d'informations comprenant un produit programme d'ordinateur selon la revendication précédente.

10. Système de sélection de portions (12z, 14z, 16z) d'images (12, 14, 16) comprenant une interface de réception d'un flux vidéo comprenant une pluralité d'images (12, 14, 16) dites images natives comprenant chacune une représentation d'un sujet d'intérêt (100) et des circuits électroniques configurés pour déterminer des limites (xa, xb, ya, yb) d'une première portion (16f) d'une image (16) comprenant ledit sujet d'intérêt (100),
le procédé comprenant en outre des étapes pour :

- déterminer un facteur de zoom cible (Kc) parmi une liste de facteurs de zoom prédéterminés (K1, K2, K3, K4, K1', K2', K3', K4') à partir desdites limites (xa, xb, ya, yb), d'un facteur de zoom courant et d'au moins une résolution maximale desdites images natives, ladite pluralité de facteurs de zoom prédéterminés comprenant des facteurs de zoom prédéterminés fixes (K1, K2, K3, K4) et des deuxièmes facteurs de zoom, prédéterminés, ajustables dynamiquement (K1', K2', K3', K4') après chaque détermination d'un facteur de zoom cible (Kc), selon une méthode d'ajustement d'une série de données,
- déterminer des coordonnées cibles (xta, yta, xtb, ytb) de ladite première portion (16f) d'image (16) recadrée en fonction dudit facteur de zoom cible (Kc) déterminé et de ladite au moins une résolution maximale desdites images natives.

11. Système de sélection de portions (12z, 14z, 16z) d'images (12, 14, 16) selon la revendication 10, comprenant en outre des circuits électroniques configurés pour :

- déterminer des coordonnées d'affichage (xtar, ytar, xtbr, ytbr) d'une deuxième portion (16z) d'image (16), représentative dudit sujet (100), obtenue par un recadrage opéré en fonction dudit facteur de zoom cible (Kc), desdites coordonnées cibles (xta, yta, xtb, ytb) et de coordonnées d'affichage antérieures utilisées pour un affichage d'une troisième portion d'image sur un afficheur, et,
- restituer ladite deuxième portion (16z) d'image (16) sur un afficheur (32).

12. Système de visioconférence comprenant un système de sélection de portions d'images selon l'une des revendications 10 et 11.

**Patentansprüche**

1. Verfahren zur Auswahl von wiederzugebenden Teilbereichen (12z, 14z, 16z) von Bildern (12, 14, 16) aus einem Video-Stream (1), der eine Mehrzahl von Bildern (12, 14, 16), native Bilder genannt, umfasst, die jeweils eine Darstellung eines Motivs von Interesse (100) umfassen, das Verfahren umfassend ein

- Bestimmen (S1) von Grenzen (xa, xb, ya, yb) eines ersten Teilbereichs (16f) eines Bilds (16), der das Motiv von Interesse (100) umfasst, wobei das Verfahren **dadurch gekennzeichnet ist, dass** es ferner die folgenden Schritte umfasst:
- Bestimmen (S2) eines Zielzoomfaktors (Kc) aus einer Liste vorbestimmter Zoomfaktoren (K1, K2, K3, K4, K1', K2', K3', K4') anhand der Grenzen (xa, xb, ya, yb), eines aktuellen Zoomfaktors und wenigstens einer maximalen Auflösung (XC, YC) der nativen Bilder (12, 14, 16), wobei die Mehrzahl vorbestimmter Zoomfaktoren feste vorbestimmte Zoomfaktoren (K1, K2, K3, K4) und zweite vorbestimmte Zoomfaktoren umfasst, die nach jeder Bestimmung eines Zielzoomfaktors (Kc) gemäß einer Methode zur Einstellung einer Datenreihe dynamisch einstellbar (K1', K2', K3', K4') sind,
- Bestimmen (S3) von Zielkoordinaten (xta, yta, xtb, ytb) eines zweiten Teilbereichs (16z) eines Bilds (16), der das Motiv (100) darstellt, der aus dem ersten Teilbereich (16f) eines Bilds (16) durch einen Zuschnitt erhalten wird, der je nach dem bestimmten Zielzoomfaktor (Kc) und der wenigstens einen maximalen Auflösung der nativen Bilder (12, 14, 16) vorgenommen wird.

2. Verfahren zur Auswahl von Bildteilbereichen nach Anspruch 1, wobei das Verfahren ferner nach dem Schritt (S3) des Bestimmens von Zielkoordinaten Folgendes umfasst:

- ein Bestimmen (S4) von Anzeigekoordinaten (xtar, ytar, xtbr, ytbr) des zweiten Teilbereichs (16z) eines Bilds (16) anhand der Zielkoordinaten (xta, yta, xtb, ytb) und vorherigen Anzeigekoordinaten (xtar', ytar', xtbr', ytbr'), die für eine Anzeige eines dritten Teilbereichs (14z) eines Bilds (14) auf einer Anzeigeeinrichtung (32) verwendet werden, und
- ein Anzeigen (S5) des zweiten Teilbereichs (16z) eines Bilds (16) auf der Anzeigeeinrichtung (32).

3. Verfahren zur Auswahl von Bildteilbereichen nach Anspruch 2, wobei das Bestimmen von Anzeigekoordinaten (xtar, ytar, xtbr, ytbr) eines zweiten Teilbereichs (16z) eines Bilds (16) eine zeitliche Filterung umfasst, die anhand einer Mehrzahl von vorherigen Anzeigekoordinaten vorgenommen wird, die für eine Anzeige von Teilbereichen (12z, 14z) von Bildern (12, 14) verwendet werden.

4. Verfahren zur Auswahl von Bildteilbereichen nach einem der Ansprüche 1 bis 3, wobei das Bestimmen von Grenzen des ersten Teilbereichs (16f) eines Bilds (16) eine zeitliche Filterung umfasst, die anhand einer Mehrzahl von Bildern (12, 14, 16) vorgenommen wird.

5. Verfahren zur Auswahl von Bildteilbereichen nach einem der Ansprüche 1 bis 4, wobei das Bestimmen eines Zielzoomfaktors (Kc) unter Verwendung eines Hysteresemechanismus vorgenommen wird.

6. Verfahren zur Auswahl von Bildteilbereichen nach einem der Ansprüche 1 bis 5, das eine Veränderung wenigstens eines der zweiten Zoomfaktoren der Mehrzahl von zweiten Zoomfaktoren (K1', K2', K3', K4') wenigstens je nach dem Zielzoomfaktor (Kc) umfasst.

7. Verfahren zur Auswahl von Bildteilbereichen nach Anspruch 6, wobei die Veränderung wenigstens eines der zweiten Zoomfaktoren ein Verfahren zur Veränderung einer Datenfolge gemäß einem Algorithmus eines "Adaptive Neural Gas" genannten Typs verwendet.

8. Computerprogrammprodukt, **dadurch gekennzeichnet, dass** es Programmcode-Anweisungen zur Ausführung der Schritte des Verfahrens nach einem der Ansprüche 1 bis 7 bei Ausführung des Programm durch einen Prozessor umfasst.

9. Informationsspeichermedium umfassend ein Computerprogrammprodukt nach dem vorhergehenden Anspruch.

10. System zur Auswahl von Teilbereichen (12z, 14z, 16z) von Bildern (12, 14, 16), umfassend eine Schnittstelle zum Empfang eines Video-Streams, der eine Mehrzahl von Bildern (12, 14, 16), native Bilder genannt, umfasst, die jeweils eine Darstellung eines Motivs von Interesse (100) umfassen, und elektronische Schaltungen, die dazu konfiguriert sind, Grenzen (xa, xb, ya, yb) eines ersten Teilbereichs (16f) eines Bilds (16) zu bestimmen, der das Motiv von Interesse (100) umfasst,
wobei das Verfahren ferner Schritte für Folgendes umfasst:

 - Bestimmen eines Zielzoomfaktors (Kc) aus einer Liste vorbestimmter Zoomfaktoren (K1, K2, K3, K4, K1', K2', K3', K4') anhand der Grenzen (xa, xb, ya, yb), eines aktuellen Zoomfaktors und wenigstens einer maximalen Auflösung der nativen Bilder, wobei die Mehrzahl vorbestimmter Zoomfaktoren feste vorbestimmte Zoomfaktoren (K1, K2, K3, K4) und zweite vorbestimmte Zoomfaktoren umfasst, die nach jeder Bestimmung eines Zielzoomfaktors (Kc) gemäß einer Methode zur Einstellung einer Datenreihe dynamisch einstellbar sind (K1', K2', K3', K4'),
 - Bestimmen von Zielkoordinaten (xta, yta, xtb, ytb) des ersten Teilbereichs (16f) eines Bilds (16), der je nach dem bestimmten Zielzoomfaktor (Kc) und der wenigstens einen maximalen Auflösung der nativen Bilder zugeschnitten ist.

11. System zur Auswahl von Teilbereichen (12z, 14z, 16z) von Bildern (12, 14, 16) nach Anspruch 10, ferner umfassend elektronische Schaltungen, die für Folgendes konfiguriert sind:

 - Bestimmen von Anzeigekoordinaten (xtar, ytar, xtbr, ytbr) eines zweiten Teilbereichs (16z) eines Bilds (16), der das Motiv (100) darstellt, der durch einen Zuschnitt erhalten wird, der je nach dem Zielzoomfaktor (Kc), den Zielkoordinaten (xta, yta, xtb, ytb) und vorherigen Anzeigekoordinaten, die für eine Anzeige eines dritten Teilbereichs eines Bilds auf einer Anzeigeeinrichtung verwendet werden, vorgenommen wird, und
 - Wiedergeben des zweiten Teilbereichs (16z) eines Bilds (16) auf einer Anzeigeeinrichtung (32).

12. Videokonferenzsystem umfassend ein System zur Auswahl von Bildteilbereichen nach einem der Ansprüche 10 und 11.

## Claims

1. Method for selecting portions (12z, 14z, 16z) of images (12, 14, 16) to be reproduced, from a video stream (1) comprising a plurality of images (12, 14, 16) referred to as native images, each comprising a representation of a subject of interest (100), the method comprising a:

- determination (S1) of limits (xa, xb, ya, yb) of a first portion (16f) of an image (16) comprising said subject of interest (100), the method being **characterised in that** it furthermore comprises the steps of:
- determining (S2) a target zoom factor (Kc) among a list of predetermined zoom factors (K1, K2, K3, K4, K1', K2', K3', K4') from said limits (xa, xb, ya, yb), a current zoom factor and at least one maximum resolution (XC, YC) of said native images (12, 14, 16), said plurality of predetermined zoom factors comprising fixed predetermined zoom factors (K1, K2, K3, K4) and second predetermined zoom factors (K1', K2', K3', K4') adjustable dynamically after each determination of a target zoom factor (Kc), in accordance with a method of adjusting a series of data,
- determining (S3) target coordinates (xta, yta, xtb, ytb) of a second portion (16z) of an image (16), representing said subject (100), obtained from said first portion (16f) of an image (16), by a reframing implemented according to said target zoom factor (Kc) determined and from said at least one maximum resolution of said native images (12, 14, 16).

2. Method for selecting portions of images according to claim 1, said method furthermore comprises, subsequently to the step (S3) of determining target coordinates:

   - a determination (S4) of display coordinates (xtar, ytar, xtbr, ytbr) of said second portion (16z) of an image (16) from said target coordinates (xta, yta, xtb, ytb) and prior display coordinates (xtar', ytar', xtbr', ytbr') used for a display of a third portion (14z) of an image (14) on a display (32), and
   - a display (S5) of said second portion (16z) of an image (16) on said display (32).

3. Method for selecting portions of an image according to claim 2, wherein said determination of display coordinates (xtar, ytar, xtbr, ytbr) of a second portion (16z) of an image (16) comprises a time filtering implemented using a plurality of prior display coordinates used for a display of portions (12z, 14z) of images (12, 14).

4. Method for selecting portions of images according to one of claims 1 to 3, wherein said determination of limits of said first portion (16f) of an image (16) comprises a time filtering implemented using a plurality of images (12, 14, 16).

5. Method for selecting portions of images according to one of claims 1 to 4, wherein said determination of a target zoom factor (Kc) is implemented using a hysteresis mechanism.

6. Method for selecting portions of an image according to one of claims 1 to 5, comprising a modification of at least one of the second zoom factors in said plurality of second zoom factors (K1', K2', K3', K4') according to at least said target zoom factor (Kc).

7. Method for selecting portions of images according to claim 6, wherein said modification of at least one of the second zoom factors uses a method for modifying a series of data according to an algorithm of a so-called "Adaptive Neural Gas" type.

8. Computer program product, **characterised in that** it comprises program code instructions for performing the steps of the method according to any one of claims 1 to 7, when said program is executed by a processor.

9. Information storage medium comprising a computer program product according to the preceding claim.

10. System for selecting portions (12z, 14z, 16z) of images (12, 14, 16) comprising an interface for receiving a video stream comprising a plurality of images (12, 14, 16) referred to as native images each comprising a representation of a subject of interest (100), and electronic circuits configured to determine limits (xa, xb, ya, yb) of a first portion (16f) of an image (16) comprising said subject of interest (100),
the method furthermore comprising steps for:

    - determining a target zoom factor (Kc) among a list of predetermined zoom factors (K1, K2, K3, K4, K1', K2', K3', K4') from said limits (xa, xb, ya, yb), a current zoom factor and at least one maximum resolution of said native images, said plurality of predetermined zoom factors comprising fixed predetermined zoom factors (K1, K2, K3, K4) and second predetermined zoom factors (K1', K2', K3', K4') adjustable dynamically after each determination of a target zoom factor (Kc), in accordance with a method of adjusting a series of data,
    - determining target coordinates (xta, yta, xtb, ytb) of said first portion (16f) of an image (16) reframed according to said target zoom factor (Kc) determined and said at least one maximum resolution of said native images.

11. System for selecting portions (12z, 14z, 16z) of images (12, 14, 16) according to claim 10, further comprising electronic circuits configured to:

> - determine display coordinates (xtar, ytar, xtbr, ytbr) of a second portion (16z) of an image (16), representing said subject (100), obtained by a reframing implemented according to said target zoom factor (Kc), said target coordinates (xta, yta, xtb, ytb) and prior display coordinates used for a display of a third portion of an image on a display, and
> - reproduce said second portion (16z) of an image (16) on a display (32).

12. Videoconference system comprising a system for selecting portions of images according to one of claims 10 and 11.

Fig. 1

Fig. 2

Fig. 3

Fig. 4

Fig. 5

S0

Init.

déterminer des limites d'une
portion d'image

S1

déterminer un facteur
de zoom cible

S2

déterminer des coordonnées
cibles

S3

déterminer des coordonnées
d'affichage

S4

afficher la portion d'image
recadrée

S5

Fig. 6

Fig. 7

Fig. 8

**EP 4 307 210 B1**